# EUROPÄISCHE PATENTSCHRIFT

(11) **EP 0 521 052 B1**
(45) Veröffentlichungstag und Bekanntmachung des Hinweises auf die Patenterteilung: **26.01.1994**
(21) Anmeldenummer: 91906416.2
(22) Anmeldetag: 18.03.1991
(51) Int. Cl.: F01N 3/18, F01N 3/20, F01N 3/28, F02D 41/14

(54) **VERFAHREN UND VORRICHTUNG ZUR BETRIEBSÜBERWACHUNG EINES KATALYSATORS EINER VERBRENNUNGSMASCHINE**
PROCESS AND DEVICE FOR MONITORING THE PERFORMANCE OF A CATALYST IN AN INTERNAL COMBUSTION ENGINE
PROCEDE ET DISPOSITIF PERMETTANT DE SURVEILLER LE FONCTIONNEMENT D'UN CATALYSEUR DANS UN MOTEUR A COMBUSTION INTERNE

(30) Priorität: 19.03.1990 DE 4008779
(43) Veröffentlichungstag der Anmeldung: 07.01.1993
(60) Teilanmeldung: 93111141.3
(73) Patentinhaber: Emitec Gesellschaft für Emissionstechnologie mbH, 53797 Lohmar (DE)
(72) Erfinder: MAUS, Wolfgang, D-5060 Bergisch Gladbach 1 (DE); SWARS, Helmut, D-5060 Bergisch Gladbach 1 (DE); BRÜCK, Rolf, D-5063 Overath (DE)
(74) Vertreter: Kahlhöfer, Hermann, Dipl.-Phys.
(86) Internationale Anmeldenummer: EP9100518
(87) Internationale Veröffentlichungsnummer: WO9114855

(56) Entgegenhaltungen:
- WO-A-89/10471
- DE-A- 2 643 739
- US-A- 3 906 721
- Patent Abstracts of Japan, Band 13, Nr. 392 (M-865), 30. August 1989 & JP, A, 1/139906 (BABCOCK HITACHI) 1. Juni 1989
- Patent Abstracts of Japan, Band 5, Nr. 127 (M-083), 15. August 1981 & JP, A, 56/64139 (FUJI) 1. Juni 1981
- Patent Abstracts of Japan, Band 12, Nr. 83 (M-677), 16. März 1988 & JP, A, 62/223427 (NISSAN) 1. Oktober 1987
- Patent Abstracts of Japan, Band 13, Nr. 559 (M-905), 12. Dezember 1989 & JP, A, 1/232106 (NISSAN) 18. September 1989

## Beschreibung

Die vorliegende Erfindung betrifft ein Verfahren zur Betriebsüberwachung eines Katalysators für Abgase einer Verbrennungsmaschine mit Abgassystem sowie eine hierfür geeignete Vorrichtung.

Entsprechend den in vielen Ländern immer strenger werdenden Umweltschutzvorschriften werden inzwischen viele Verbrennungsmaschinen, insbesondere bei Kraftfahrzeugen, mit einem Katalysator ausgestattet. Ein solcher Katalysator wird vom Abgas durchströmt und setzt in seinem katalytisch aktiven Volumen, welches eine große Oberfläche aufweist, die mit dem Abgas in Kontakt tritt, Schadstoffe im Abgas katalytisch zu unschädlichen Stoffen um. Als Trägerkörper für katalytisch aktives Material sind viele verschie ene Ausführungen bekannt, teilweise aus Keramik und teilweise aus Metall. Es handelt sich im allgemeinen um wabenähnliche Körper, welche eine Vielzahl von Kanälen aufweisen, die vom Abgas durchströmt werden. Metallische Katalysatoren werden im allgemeinen aus strukturierten Blechen geschichtet, spiralig aufgewickelt oder anderweitig verschlungen. Solche Formen sind beispielsweise in der EP-B-0 223 058, der EP-B-0 245 737 oder der EP-B-0 245 738 beschrieben.

Um zur weiteren Reduzierung von Schadstoffen eine katalytische Umsetzung unmittelbar nach dem Start des Motors zu gewährleisten, wurden auch bereits elektrisch beheizbare Katalysatoren vorgeschlagen, die schneller die für eine katalytische Umsetzung notwendige Temperatur erreichen. Solche heizbaren Katalysatoren sind beispielsweise in der WO 89/10470 beschrieben.

Auch in der WO 89/10471 sind beheizbare Katalysatorkörper beschrieben, welche gleichzeitig über die Messung ihres Widerstandes auch als Temperaturfühler dienen können. Im Einsatz als Temperaturfühler messen sie die Temperatur integral über den gesamten beheizbaren Bereich, insbesondere integral über einen gesamten Querschnittsbereich. Wegen des insgesamt geringen Widerstandes eines solchen beheizbaren Wabenkörpers ist die Meßgenauigkeit, insbesondere bei transienten Vorgängen, nicht besonders hoch. Die Überwachung eines Katalysators allein mit einer solchen Widerstandsmessung über den ganzen Körper ist nur begrenzt aussagekräftig.

Als zusätzliche Ergänzung der bekannten Systeme ist es als wünschenswert erkannt worden, die Funktionsfähigkeit einer katalytischen Abgasreinigung während des Betriebes ständig überwachen zu können, um Fehlfunktionen frühzeitig erkennen und beseitigen zu können. Dies wurde z. B. mit Hilfe von zwei Temperaturmeßstellen versucht, wobei die Temperaturdifferenz beobachtet wurde. Solche Anordnungen sind in der WO 88/07622 Al, der DE 35 16 981 Al, der DE-AS 23 46 425 oder der DE 26 43 739 C2 beschrieben.

Aufgabe der Erfindung ist es, mit einem möglichst geringen Aufwand an Instrumentierung und bei geringer Störanfälligkeit ein solches Meßsystems für eine möglichst genaue und umfassende Überwachung der Funktion des Katalysators im Betrieb zu ertüchtigen.

Diese Aufgabe wird gelöst durch ein Verfahren zur Betriebsüberwachung eines Katalysators für Abgas einer Verbrennungsmaschine mit Abgassystem, bei dem an mindestens zwei räumlich beabstandeten Querschnittsbereichen im Abgassystem die Temperatur gemessen und überwacht wird, wobei zwischen den beiden Meßstellen zumindest ein Teil des für die katalytische Umsetzung von Schadstoffen im Abgas maßgeblichen Katalysatorvolumens liegt, wobei die Temperatur an mindestens einer der Meßstellen nicht punktuell sondern über einen repräsentativen Teil des Querschnittsbereiches integral gemessen wird.

Der Erfindung liegt der Gedanke zugrunde, daß die Umsetzung von Schadstoffen im Katalysator eine exotherme Reaktion ist, bei der also Energie frei wird. Diese Energie führt dazu, daß das mit Schadstoffen beaufschlagte Abgas vor dem Katalysator (zumindest in einem quasistationären Zustand) eine geringere Temperatur als das gereinigte Abgas hinter dem Katalysator hat. Dieser Effekt soll bei der vorliegenden Erfindung zur Überwachung der Funktionsfähigkeit des Katalysators und nach Möglichkeit noch zur Ermittlung anderer Informationen herangezogen werden. Hierzu wird die Temperatur in zwei Querschnittsbereichen im Abgassystem gemessen, zwischen denen sich zumindest ein Teil des für die katalytische Umsetzung maßgeblichen Katalysatorvolumens liegt. Wie anhand der Zeichnung näher erläutert wird, ist es nicht unbedingt nötig zur Erzielung von signifikanten Meßergebnissen, daß das gesamte Katalysatorvolumen zwischen den Meßstellen liegt. Es kommen daher verschiedene Anordnungen der Meßstellen in Betracht, die von den räumlichen Gegebenheiten des einzelnen Abgassystems stark abhängen können. Im einfachsten Fall kann wie erwähnt die Temperatur in der Abgasleitung vor dem Katalysator und hinter dem Katalysator gemessen werden. Da im allgemeinen in einem Abgassystem keine homogene Temperaturverteilung über den gesamten Strömungsquerschnitt vorliegt, insbesondere nicht innerhalb eines Katalysatorkörpers, ist es sinnvoll, die Temperatur an bestimmten Meßstellen nicht punktuell, sondern über einen etwa repräsentativen Teil des Querschnittsbereiches integral zu messen. Hierdurch wird die Genauigkeit der Überwachung erhöht. Als repräsentativ wird dabei eine Messung angesehen, die sowohl aus den Randbereichen der Strömung wie auch aus den Zentralbereichen Informationen enthält. Ein Querschnittsbereich ist dabei eine etwa in einer Querschnittsebene liegende Scheibe aus dem Abgassystem, in welcher die Messung durchgeführt wird.

Geeignet für integrale Messungen sind beispielsweise flächige oder etwa linienförmige Temperaturfühler, wie sie im Stand der Technik zahlreich bekannt sind. Insbesondere kommen Meßfühler mit einem temperaturabhängigen Widerstand, vorzugsweise in Form eines Drahtes, in Betracht. Temperaturmessungen gehören im übrigen zu den genauesten und am besten beherrschten Messungen in der Technik und eignen sich daher für die vorliegende Anwendung. Sie reagieren auch auf relativ kleine und schnelle Änderungen.

Vorteilhaft kann es sein, eine oder zwei Temperaturmeßstellen innerhalb des Katalysators selbst anzuordnen. Insbesondere bei beheizbaren Katalysatoren sind an diesem ohnehin schon elektrische Durchführungen und Anschlüsse vorhanden, so daß diese zusätzliche Instrumentierung den Aufwand an Verkabelung des Abgassystems nicht übermäßig erhöht. Dabei kann davon ausgegangen werden, daß eine in den Katalysator integrierte Temperaturmeßstelle im vorderen Stirnbereich eine Temperatur proportional zu der Temperatur des anströmenden Abgases mißt, während eine Temperaturmeßstelle im Abströmbereich des Katalysators eine der Temperatur der abströmenden Abgase proportionale Temperatur mißt. Bei einer solchen Anordnung können unterschiedliche systemtechnische und theoretische Ansätze gemacht werden. Man kann einerseits die Temperaturfühler so anordnen, daß sie im wesentlichen vom Abgas umströmt werden und daher die Abgastemperatur messen, man kann jedoch auch die Temperaturmeßstellen so anordnen, daß sie im wesentlichen in einem guten Wärmekontakt mit dem Katalysatormaterial oder dem Trägermaterial des Katalysators stehen. Für beide Möglichkeiten gibt es gute Gründe, die unter Berücksichtigung der hauptsächlichen Betriebstemperaturen und der Geometrie der Katalysatoranordnungen bei der Auswahl des Meßsystems berücksichtigt werden müssen. Günstig kann es beispielsweise sein, im vorderen Bereich des Katalysators die Gastemperatur zu messen und im hinteren Bereich die Temperatur des Trägermaterials. Die bei der katalytischen Umsetzung freiwerdende Energie wird nach dem derzeitigen Verständnis der Wärmetransportvorgänge zunächst auf das Trägermaterial des Katalysators übertragen und von diesem wieder auf das abströmende Abgas.

Jedenfalls ist die im Katalysator erzeugte Energie so hoch, daß signifikante Temperaturunterschiede leicht zu messen sind. Es reicht daher auch aus, wenn zwischen den Meßstellen nicht das gesamte aktive Katalysatorvolumen liegt, sondern mehr als 50, vorzugsweise mehr als 70 %.

Die Genauigkeit der Messung wird auch dadurch erhöht, daß in einer Überwachungselektronik die Temperaturdifferenz zwischen mindestens zwei Meßwerten an den Meßstellen gebildet wird. Aus dem Vorzeichen, der absoluten Größe und/oder dem zeitlichen Verhalten der Temperaturdifferenz kann auf die Funktion des Katalysators und/oder sogar der Steuerung der Verbrennungsmaschine oder der Katalysatorregelung (falls vorhanden) geschlossen werden. Bildet man die Temperaturdifferenz Delta T = T1 - T2, wobei T1 der Meßwert an einer vorderen Meßstelle und T2 der Meßwert an einer hinteren Meßstelle ist, so können qualitativ folgende Aussagen direkt gewonnen werden:
a) Ist Delta T sehr klein oder gar positiv, so findet im Katalysator keine Umsetzung statt, so daß eine Meldung "Katalysator defekt" erfolgen soll.
b) Ist Delta T negativ und innerhalb eines bestimmten Toleranzbereiches, so sind alle Systeme in Ordnung und es erfolgt keine Meldung.
c) Ist Delta T negativ und sehr groß, so gelangen offensichtlich zu große Schadstoffanteile bzw. unverbrannte Brennstoffreste ins Abgassystem, weshalb im Katalysator eine heftige Reaktion stattfindet. In diesem Fall soll eine Meldung "Steuerung der Verbrennungsmaschine defekt" erfolgen.

Wie anhand der Ausführungsbeispiele noch näher beschrieben wird, ist das vorgeschlagene Meßsystem außerordentlich empfindlich für das Auftreten von unverbrannten Brennstoffresten im Abgas. Es können daher mit dem System auch Fehler in der Steuerung der Verbrennungsmaschine mit hoher Empfindlichkeit diagnostiziert werden, insbesondere auch seltene periodische oder episodische Zündaussetzer bei Einspritzmotoren.

Das Verfahren kann weiter dadurch verfeinert werden, daß bei Verbrennungsmotoren mit elektronischer Steuerung eine Datenverbindung zwischen der Überwachungselektronik und der Motorsteuerung hergestellt wird. So können dem Überwachungssystem Daten über die Motordrehzahl, die Motorlast, Massenströme, Umgebungsbedingungen etc. zugeführt werden, aus welchen sich die zu erwartende Temperaturdifferenz Delta T bei ordnungsgemäßer Funktion der Anlage in bestimmten Grenzen vorhersagen läßt. Auf diese Weise kann mit üblichen Mikroprozessoren die oben beschriebene qualitative Diagnose zu einer präzisen quantitativen Diagnose verfeinert werden. Gegebenenfalls können dabei auch die Meßwerte von einer oder mehreren Lambda-Sonden im Abgassystem mit verarbeitet werden. Schließlich ist auch eine Rückwirkung der Überwachungselektronik auf die Motorsteuerung möglich, indem bei bestimmten Betriebszuständen des Katalysators (beispielsweise vor Erreichen der Betriebstemperatur oder bei Überschreiten einer vorgegebenen Maximaltemperatur) entsprechende Steuerbefehle in der Motorsteuerung beeinflußt werden. Es sei noch darauf hingewiesen, daß eine zeitliche Veränderung der Temperaturfühler durch eine von der Überwachungselektronik selbst durchführbare gelegentliche Neukalibrierung ausgeglichen werden kann. Nach einem langen Stillstand der Verbrennungsmaschine müssen sich alle Temperaturfühler auf der gleichen Temperatur befinden, so daß in diesem Zustand eine Nachkalibrierung möglich ist, ggf. unter Einbeziehung der anderweitig gemessenen Außentemperatur. wartungsarbeiten oder ein Eingriff von außen sind hierzu nicht nötig.

Zur Lösung der gestellten Aufgabe, der genauen und umfassenden Betriebsüberwachung eines Katalysators, dient eine Vorrichtung, die mindestens zwei Temperaturfühler in mindestens zwei in Strömungsrichtung hintereinander angeordneten Querschnittsbereichen des Abgassystems enthält, wobei zwischen den beiden Querschnittsbereichen zumindest ein Teil des für die katalytische Umsetzung von Schadstoffen im Abgas maßgeblichen Katalysatorvolumens liegt und wobei mindestens einer der Temperaturfühler (TF; TF1, TF2; TF1', TF2') flächig oder etwa linienförmig ausgebildet ist und die Temperatur über einen etwa repräsentativen Teil des Querschnittsbereiches, in dem er angeordnet ist, integral mißt. Weiter wird eine Überwachungselektronik zur Auswertung der Temperaturmeßwerte und eine Anzeigevorrichtung für das Ergebnis der Auswertung benötigt. Weitere Einzelheiten solcher Vorrichtungen werden im folgenden anhand der Zeichnung näher beschrieben.

Wichtig ist noch, darauf hinzuweisen, daß das vorliegende Überwachungssystem besonders geeignet in Verbindung mit elektrisch beheizbaren Katalysatoren ist. Bei elektrisch beheizbaren Katalysatoren ist es wünschenswert, die tatsächlich aktuell erreichte Temperatur jeweils zu messen, um damit die Beheizung zu regeln und ggf. den Start des Motors nach Erreichen der Starttemperatur freizugeben. Für diesen Zweck können die zur Betriebsüberwachung vorgesehenen Temperaturfühler alle oder teilweise mit herangezogen werden, wodurch ein zusätzlicher Aufwand entfällt. Da elektrisch beheizbare Katalysatoren ohnehin elektrische Anschlüsse aufweisen, ist es auch vorteilhaft, dort die Anschlüsse zur Instrumentierung vorzusehen, so daß außer der Verkabelung einer eventuell vorhandenen Lambda-Sonde nur ein zusätzlicher Kabelstrang zum Abgassystem führt.

Im folgenden wird auch ein speziell ausgebildeter Katalysator beschrieben, der in mindestens einem Querschnittsbereich nahe mindestens einer seiner Stirnflächen mindestens einen integrierten Temperaturfühler aufweist, der die Temperatur über einen etwa repräsentativen Teil des Querschnittsbereiches integral mißt. Ein solcher Katalysator ist insbesondere für die bisher beschriebenen Vorrichtungen und zur Durchführung des Überwachungsverfahrens geeignet.

Spezielle Ausführungsformen der integrierten Temperaturfühler werden ebenfalls im folgenden anhand der Zeichnung beschrieben.

Eine teilweise schematische Übersichtsdarstellung und Ausführungsbeispiele für Einzelheiten der vorliegenden Erfindung sind in der Zeichnung dargestellt. Es zeigen
Figur 1 eine schematische Übersicht über ein erfindungsgemäßes Motor- und Katalysatorüberwachungssystem,
Figur 2 ein Ausführungsbeispiel für einen Querschnitt durch einen erfindungsgemäß ausgestalteten Katalysator in der Ebene eines Temperaturfühlers,
Figuren 3 und 4 den Aufbau eines geeigneten Temperaturfühlers im Längsschnitt (Figur 3) und im Querschnitt (Figur 4) und
Figur 5 ein schematisches Beispiel für die fertigungstechnische Einbindung eines Temperaturfühlers in einen Katalysatorkörper.

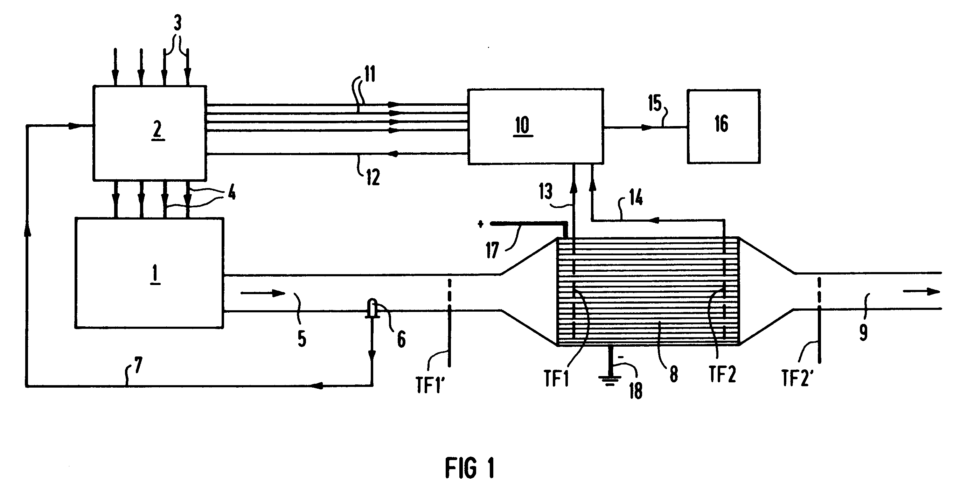

Figur 1 zeigt schematisch einen Verbrennungsmotor 1 mit einer elektronischen Motorsteuerung 2, welche über Meßwertzuleitunger 3 Informationen von außen erhält und danach über Motorzuleitungen 4 den Motor 1 steuert. Aus dem Motor gelangen Abgase in Pfeilrichtung in eine Abgasleitung 5, in welcher eine Lambda-Sonde 6 angeordnet ist, welche wiederum über eine Meßwertleitung 7 mit der Motorsteuerung 2 in Verbindung steht. In der Abgasleitung ist ein Katalysator 8 angeordnet, an den sich eine Abgasauslaßleitung 9 anschließt. Der Katalysator 8 kann aus einer oder mehreren einzelnen Scheiben bestehen und natürlich kann das Abgassystem auch mehrsträngig aufgebaut sein, was jedoch für die vorliegende Erfindung beides keine entscheidende Rolle spielt. Der Katalysator 8 kann auch zumindest in Teilbereichen elektrisch beheizbar sein und dementsprechende elektrische Anschlüsse 17 und 18 aufweisen. Erfindungsgemäß sollen im Abgassystem mindestens zwei Temperaturfühler angeordnet sein, zwischen denen sich zumindes ein Teil des katalytisch aktiven Volumens befindet. Für den vorderen Temperaturfühler sind in Figur 1 zwei Alternativen angegeben, nämlich der Temperaturfühler TF1 im vorderen Stirnbereich des Katalysators 8 und der Temperaturfühler TF1' in der Abgasleitung 5. Für den hinteren Temperaturfühler sind ebenfalls zwei Alternativen angegeben, nämlich ein im hinteren Stirnbereich des Katalysators 8 integrierter Temperaturfühler TF2 und ein in der Abgasauslaßleitung 9 angeordneter Temperaturfühler TF2'. Welche der jeweiligen Alternativen miteinander vorteilhaft kombiniert werden sollten, hängt von den geometrischen Gegebenheiten und anderen Faktoren ab. Wichtig ist vor allem, daß zwischen den Meßstellen ein wesentlicher Teil der katalytischen Reaktionen abläuft. Die Temperaturmeßwerte werden über die Meßleitungen 13 und 14 einer Überwachungselektronik 10 zugeführt. Diese wertet die Meßwerte aus, wobei ggf. Daten aus der Motorsteuerung 2 über Datenzuleitungen 11 bei der Auswertung hinzugezogen werden können. Auch eine Rückwirkung der Überwachungselektronik 10 auf die Motorsteuerung 2 über Datenableitungen 12 ist möglich. Das Ergebnis der Überwachung wird über eine Diagnoseleitung 15 an eine Anzeige 16 des Diagnoseergebnisses weitergegeben. Diese Anzeige kann z. B. in Form von Signallampen oder Anzeigeinstrumenten ausgebildet sein.

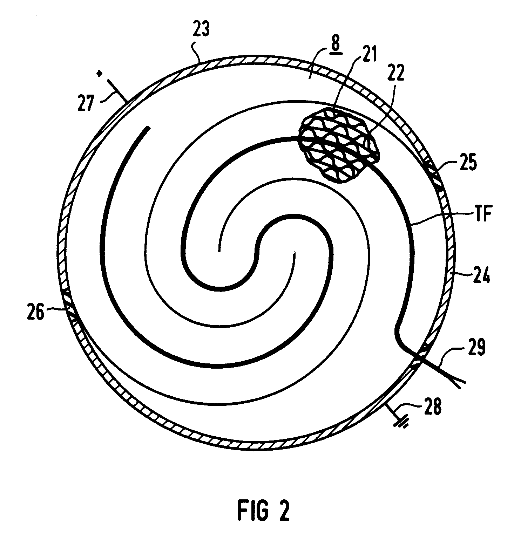

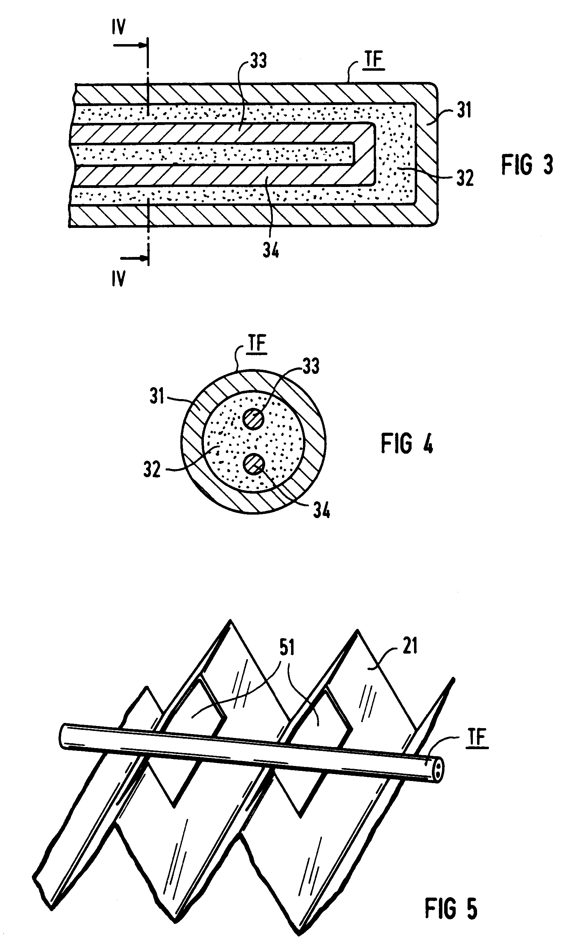

Für den Fall, daß Temperaturfühler in einen Katalysator 8 integriert werden, veranschaulicht Figur 2 ein mögliches Ausführungsbeispiel der Erfindung. Figur 2 ist dabei ein teilweise schematisch dargestellter Schnitt durch den Katalysator 8 in der Ebene eines Temperaturfühlers TF. Bei Figur 2 handelt es sich um eine an sich aus der WO 89/10470 bekannte Ausführungsform eines elektrisch beheizbaren metallischen Katalysatorträgers, der aus gegensinnig verschlungenen Blechlagen besteht und in seiner Querschnittsfläche durch Isolierschichten so unterteilt ist, daß ein für eine Beheizung geeigneter elektrischer Widerstand und Strompfad entsteht. Dieser Katalysator 8 ist aus abwechselnden Lagen gewellter 21 und glatter Bleche 22 aufgebaut und in seinem Inneren mit hier nur schematisch angedeuteten spiralförmig nach innen laufenden Isolierschichten versehen. Die Blechlagen sind von einem Mantel umgeben, der aus zwei Halbschalen 23, 24 besteht, welche durch Isolierabschnitte 25, 26 elektrisch voneinander getrennt sind. Die Mantelhalbschalen 23, 24 sind mit elektrischen Anschlüssen 27, 28 für eine elektrische Beheizung versehen. Im Inneren dieses Katalysators 8 verläuft nun parallel zu den einzelnen Blechlagen ein Temperaturfühler TF, der im vorliegenden Ausführungsbeispiel einen Draht enthält, dessen Widerstand sich mit der Temperatur ändert. Um nicht zwei Anschlüsse für den Temperaturfühler an verschiedenen Stellen vorsehen zu müssen, ist der Widerstandsdraht im Inneren U-förmig verlegt, d. h. er besteht aus am Ende verbundener Hin- und Rückleitung, wie dies in den Figuren 3 und 4 veranschaulicht wird. Der Temperaturfühler TF ist an einer Seite durch den Mantel 24 nach außen geführt und weist dort Anschlüsse 29 für die Meßleitungen auf. Das hier dargestellte Prinzip zur Verlegung eines Temperaturfühlers TF in einem Katalysator 8 ist nur ein Ausführungsbeispiel. Viele andere Möglichkeiten für anders aufgebaute Katalysatoren sind denkbar, insbesondere das spiralige Aufwickeln eines Temperaturfühlers oder auch das Einbringen in eine Querbohrung sind denkbar.

Figur 3 zeigt zur Veranschaulichung einen Längsschnitt durch das Ende des Temperaturfühlers TF, und in Figur 4 ist ein Querschnitt entlang der Linie IV-IV in Figur 3 dargestellt. Der Thermofühler hat einen Mantel 31, welcher beispielsweise aus Inconel oder einem anderen hochtemperaturfesten Stahl mit Chrom- und/oder Aluminium-Anteilen bestehen kann. Je nach den Anforderungen kann der Mantel 31 auch aus dem gleichen Material bestehen wie die Bleche des Katalysators 8, wodurch eine Verlötung zwischen Temperaturfühler TF und Blechen 21, 22 bzw. dem Mantel 24 problemlos möglich wird. Im Inneren des Temperaturfühlers TF ist ein Draht 33, 34 U-förmig verlegt, wobei der Draht beispielsweise aus Nickel oder einem anderen Material bestehen kann, welches einen stark von der Temperatur abhängigen Widerstand aufweist. Eine Isolierschicht 32, z. B. aus Magnesiumoxidpulver, verhindert in bekannter Weise Kontakte zwischen den beiden Leitungen 33, 34 des Widerstandsdrahtes untereinander und zu dem Mantel 31.

Figur 5 zeigt zur Veranschaulichung einen kleinen Ausschnitt aus einem gewellten bzw. im vorliegenden Fall gefalteten Blech, wie es zum Aufbau von Katalysator-Trägerkörpern verwendet wird. Durch Einschleifen einer geeigneten Nut quer zum Verlauf der Struktur in die Wellenberge kann eine Aufnahme für einen Temperaturfühler TF geschaffen werden, die es ermöglicht, den Temperaturfühler zusammen mit dem strukturierten Blech 21 zu einem Katalysator-Trägerkörper zu schichten bzw. zu wickeln oder zu verschlingen. Die Nut 51 sollte dabei nicht wie hier zur Veranschaulichung dargestellt wesentlich größer als der Querschnitt des Temperaturfühlers sein, sondern etwa dessen Abmessungen haben, so daß eine Einlötung oder zumindest eine Fixierung des Temperaturfühlers TF durch die Nut möglich ist. Sofern die Nut 51 so tief gemacht wird, daß der Temperaturfühler TF etwa auf halber Höhe der wellung liegt, so mißt dieser hauptsächlich die Temperatur des vorbeiströmenden Gases und nicht in gleichem Maße die Temperatur der Struktur selbst. Durch eine geringere Tiefe der Nut 51 und möglicherweise eine Verlötung mit dem angrenzenden nächsten glatten Blech kann hingegen erreicht werden, daß der Temperaturfühler TF hauptsächlich die Temperatur der Trägerstruktur mißt. Eine flexible Bauweise je nach den Anforderungen ist daher möglich.

Die vorliegende Erfindung eignet sich besonders für fortschrittliche integrale Diagnose- und Überwachungssysteme bei Kraftfahrzeugen, die Verbrennungsmotoren mit elektronischer Einspritzung aufweisen und mit geregelten Katalysatoren ausgestattet sind. Besonders günstig ist die Erfindung anwendbar in Verbindung mit elektrisch beheizbaren Katalysatoren.

## Patentansprüche

1. Verfahren zur Betriebsüberwachung eines Katalysators (8) für Abgase einer Verbrennungsmaschine (1) mit Abgassystem (5, 8, 9), wobei an mindestens zwei räumlich beabstandeten Querschnittsbereichen im Abgassystem die Temperatur gemessen (TF1, TF2; TF1', TF2') und überwacht (10) wird, wobei zwischen den beiden Meßstellen zumindest ein Teil des für die katalytische Umsetzung von Schadstoffen im Abgas maßgeblichen Katalysatorvolumens liegt, **dadurch** **gekennzeichnet,** daß die Temperatur an mindestens einer der Meßstellen (TF; TF1, TF2) nicht punktuell, sondern über einen etwa repräsentativen Teil des Querschnittsbereiches integral gemessen wird.

2. Verfahren nach Anspruch 1, **dadurch** **gekennzeichnet,** daß die Temperatur zumindest an einer der Meßstellen (TF1, TF2) mittels flächiger oder etwa linienförmiger Temperaturfühler (TF) gemessen wird.

3. Verfahren nach Anspruch 1 oder 2, **dadurch** **gekennzeichnet,** daß zumindest eine der Temperaturmeßstellen (TF1, TF2) innerhalb des Katalysators (8) angeordnet ist.

4. Verfahren nach einem der vorhergehenden Ansprüche, **dadurch** **gekennzeichnet,** daß eine erste Temperaturmeßstelle (TF1) im Anströmbereich innerhalb des Katalysators (8) und eine zweite Temperaturmeßstelle (TF2) im Abströmbereich innerhalb des Katalysators (8) angeordnet sind.

5. Verfahren nach einem der vorhergehenden Ansprüche, **dadurch** **gekennzeichnet,** daß mindestens 50 %, vorzugsweise mehr als 70 %, des katalytisch aktiven Katalysatorvolumens zwischen den mindestens zwei Meßstellen (TF1, TF2; TF1', TF2') liegen.

6. Verfahren nach einem der vorhergehenden Ansprüche, **dadurch** **gekennzeichnet,** daß in einer Überwachungselektronik (10) die mindestens eine Temperaturdifferenz zwischen den Meßwerten an den mindestens zwei Meßstellen (TF1, TF2; TF1', TF2') gebildet wird, wobei aus dem Vorzeichen und/oder der absoluten Größe und/oder dem zeitlichen Verhalten der Temperaturdifferenz die Funktion des Katalysators (8) und/oder der Steuerung (2) der Verbrennungsmaschine (1) und/oder ggf. der Katalysator-Regelung (6, 7, 2) erkennbar ist.

7. Verfahren nach Anspruch 6, **dadurch** **gekennzeichnet,** daß die Verbrennungsmaschine ein Verbrennungsmotor (1), insbesondere Otto-Motor für Kraftfahrzeuge, ist und eine elektronisch geregelte Motorsteuerung (2) aufweist, wobei die in dieser anfallenden Daten, z. B. über Motordrehzahl, Motorlast, Massenströme, Umgebungsbedingungen etc., zumindest teilweise in der Überwachungselektronik (10) mit der Temperaturdifferenz funktional verknüpft werden, z. B. über Kennfelder, um eine präzise Diagnose der Funktion der Systeme zu ermöglichen.

8. Verfahren nach Anspruch 7, **dadurch** **gekennzeichnet,** daß auch die von einer oder mehreren Lambda-Sonden (6) im Abgassystem (5, 9) ggf. gemessenen Werte in der Überwachungselektronik (10) mit ausgewertet werden.

9. Verfahren nach einem der vorhergehenden Ansprüche, **dadurch** **gekennzeichnet,** daß die Temperaturfühler (TF1, TF2; TF1', TF2' ; TF) bei definierten Betriebszuständen, z. B. nach einem längeren Stillstand der Verbrennungsmaschine (1), von der Überwachungselektronik neu kalibriert werden.

10. Vorrichtung zur Betriebsüberwachung eines Katalysators (8) für Abgase einer Verbrennungsmaschine (1), enthaltend:
a) mindestens zwei Temperaturfühler (TF1, TF2; TF1', TF2') in mindestens zwei in Strömungsrichtung hintereinander angeordneten Querschnittsbereichen des Abgassystems (5, 8, 9), wobei zwischen den beiden Querschnittsbereichen zumindest ein Teil des für die katalytische Umsetzung von Schadstoffen im Abgas maßgeblichen Katalysatorvolumens liegt, und wobei mindestens einer der Temperaturfühler (TF; TF1, TF2; TF1', TF2' ) flächig oder etwa linienförmig ausgebildet ist und die Temperatur über einen etwa repräsentativen Teil des Querschnittsbereiches, in dem er angeordnet ist, integral mißt;
b) eine Überwachungselektronik (10) zur Auswertung der Temperaturmeßwerte und
c) eine Anzeigevorrichtung (16) für das Ergebnis der Auswertung.

11. Vorrichtung nach Anspruch 10, **dadurch** **gekennzeichnet,** daß die Verbrennungsmaschine (1) eine elektronische Steuerung (2) aufweist und die Überwachungselektronik (10) über Datenleitungen (11) mit der Steuerung (2) in Verbindung steht, so daß Daten, z. B. bezüglich Drehzahl, Last, Massendurchsätze, Umgebungsbedingungen etc., der Überwachungselektronik (10) zur Verfügung stehen.

12. Vorrichtung nach Anspruch 10 oder 11, **dadurch** **gekennzeichnet,** daß mindestens einer der Temperaturfühler (TF1, TF2) in den Katalysator (8) integriert ist, vorzugsweise in der Nähe seiner Abströmseite.

13. Vorrichtung nach Anspruch 12, **dadurch** **gekennzeichnet,** daß mindestens zwei der Temperaturfühler (TF1, TF2) in den Katalysator (8) integriert sind, vorzugsweise einer (TF1) in der Nähe der Anströmseite und einer (TF2) in der Nähe der Abströmseite.

14. Vorrichtung nach einem der Ansprüche 10 bis 13, **dadurch** **gekennzeichnet,** daß mindestens einer der Temperaturfühler (TF; TF1, TF2; TF1', TF2') einen temperaturabhängigen Widerstand (33, 34) als Meßaufnehmer hat.

15. Vorrichtung nach einem der Ansprüche 10 bis 14, **dadurch** **gekennzeichnet,** daß der Katalysator (8) zumindest in Teilbereichen elektrisch beheizbar (17, 18; 27, 28) ist, wobei die Beheizung vorzugsweise ebenfalls durch die Überwachungsvorrichtung (10) unter Einbeziehung von Temperaturmeßwerten geregelt ist.

16. Vorrichtung nach einem der Ansprüche 10 bis 15, **dadurch** **gekennzeichnet,** daß die Überwachungsvorrichtung (10) über Datenleitungen (12) mit der Steuerung (2) der Verbrennungsmaschine (1) in Verbindung steht, so daß in der Steuerung (2) auch Daten aus der Überwachungsvorrichtung (10) zur Verfügung stehen.

## Claims

1. Process for monitoring performance of a catalyst (8) for exhaust gases of an internal combustion engine (1) with an exhaust system (5, 8, 9), whereby at at least two separate cross-section locations in the exhaust system, the temperature is measured (TF1, TF2, TF1', TF2') and monitored (10), whereby between the two measuring sites at least a part of the catalyst volume for catalytic conversion of pollutants in the exhaust gas is located, characterised in that at at least one measuring site (TF; TF1, TF2) is not measured at a point, but instead integrally over an approximately representative part of the cross-section location.

2. Process according to claim 1, characterised in that the temperature at at least one of the measuring sites (TF1, TF2) is measured by means of a flat or approximately linear temperature sensor (TF).

3. Process according to claim 1 or 2, characterised in that at least one of the measuring sites (TF1, TF2) is arranged inside the catalyst (8).

4. Process according to one of the previous claims, characterised in that a first temperature measuring site (TF1) is arranged in the upstream area inside the catalyst (8), and a second temperature measuring site in arranged inside the downstream area inside the catalyst.

5. Process according to one of the previous claims, characterised in that 50%, preferably more that 70% of the catalytically active catalyst volume lies between the measuring sites (TF1, TF2, TF1', TF2') of which there are at least two.

6. Process according to one of the previous claims, characterised in that in monitoring electronics (10), at least one temperature difference is sensed at at least two measuring sites (TF1, TF2, TF1', TF2') whereby from the sign and/or the absolute size and/or the temporal behaviour of the temperature difference, the functioning of the catalyst (8) and/or the regulation (2) of the internal combustion engine (1) and/or if applicable the catalyst regulator (6, 7, 2) can be determined.

7. Process according to claim 6, characterised in that the internal combustion engine is a combustion engine (1), particularly an Otto engine for vehicles and is provided with an electronically controlled engine regulator (2), whereby the data which is obtained thereby, for example concerning engine revolutions, engine loading, mass flows, environmental conditions etc, is functionally interconnected, at least in part in the monitoring electronics (10), with the temperature difference, for example, by means of performance data, to enable a precise system function diagnosis.

8. Process according to claim 7 characterised in that, if applicable, values measured by one or more lambda probes (6) in the exhaust system (5, 9) are also evaluated by the monitoring electronics.

9. Process according to one of the previous claims, characterised in that the temperature sensors (TF1, TF2, TF1', TF2'; TF) are recalibrated for defined operating conditions, for example following prolonged standstill of the combustion engine (1), by the monitoring electronics.

10. Device for monitoring a catalyst (8) for exhaust gases of a combustion engine (1) comprising:
a) at least two temperature sensors (TF1, TF2, TF1', TF2') in at least two cross-section areas arranged one behind the other in the direction of the flow in the exhaust system (5, 8, 9), whereby between the two cross-section areas at least one part of the catalyst volume for the catalytic conversion of pollutants in the exhaust gas is located, and whereby at least one of the temperature sensors (TF1, TF2, TF1', TF2') is formed in a flat or linear shape and integrally measures the temperature over an approximately representative part of the cross-section area in which it is arranged;
b) monitoring electronics (10) for evaluation of the measured temperature values and
c) an indicator device (16) for the result of the evaluation.

11. Device according to claim 10, characterised in that the combustion engine (1) is provided with electronic regulation (2) and is connected to the monitoring electronics (10) via datalinks (11), so that data, for example relating to revolutions, loading, mass throughput, environmental condition, etc, are available to the monitoring electronics (10).

12. Device according to claim 10 or 11, characterised in that at least one of the temperature sensors (TF1, TF2) is integrated in the catalyst (8), preferably near to the downstream side.

13. Device according to claim 12, characterised in that at least two of the temperature sensors (TF1, TF2) are integrated into the catalyst (8), preferably one (TF1) being near to the upstream side and one (TF2) near to the downstream side.

14. Device according to one of claims 10 to 13, characterised in that at least one of the temperature sensors (TF; TF1, TF2, TF1', TF2') has a temperature dependent resistance (33, 34) as a measuring means.

15. Device according to one of claims 10 to 14, characterised in that the catalyst (8) can, at least in parts, be electrically heated (17, 18; 27, 28) whereby the heating is preferably likewise controlled in response to temperature measurements by the monitoring electronics (10).

16. Device according to one of claims 10 to 15, characterised in that the monitoring electronics (10) are connected via datalinks (12) to the regulator (2) or the internal combustion engine (1), so that in the regulator data from the monitoring electronics are also available.

## Revendications

1. Procédé de surveillance du fonctionnement d'un catalyseur (8) pour échappement d'une machine à combustion (1) avec un système d'échappement (5, 8, 9), dans lequel on mesure (TF1, TF2 ; TF1', TF2') et on surveille (10) la température dans le système d'échappement en au moins deux régions en section transversale distantes dans l'espace, dans lequel se trouve entre les deux points de mesure au moins une partie du volume de catalyseur approprié à la transformation catalytique des matières nocives contenues dans le gaz d'échappement, **caractérisé en ce qu'**en au moins l'un des points de mesure (TF ;TF1, TF2) on ne mesure pas ponctuellement la température, mais on la mesure intégralement sur une partie approximativement représentative du domaine en section transversale.

2. Procédé selon la revendication 1, **caractérisé** **en ce** **que** l'on mesure la température au moins en l'un des points de mesure (TF ; TF1, TF2) au moyen d'un capteur de température (TF] plat ou approximativement linéaire.

3. Procédé selon la revendication 1 ou 2, **caractérisé** **en ce** **qu'**au moins l'un des points de mesure (TF1, TF2) est situé à l'intérieur du catalyseur (8).

4. Procédé selon l'une des revendications précédentes, **caractérisé** **en ce** **qu'**un premier point de mesure de température (TF1) est situé dans une zone d'entrée de fluide à l'intérieur du catalyseur (8) et un second point de mesure de température (TF2) est situé dans une zone de sortie de fluide à l'intérieur du catalyseur (8).

5. Procédé selon l'une des revendications précédentes, **caractérisé** **en ce** **qu'**au moins 50 %, de préférence au moins 70 %, du volume catalytique actif du catalyseur se trouve entre les au moins deux points de mesure (TF1, TF2 ;TF1', TF2').

6. Procédé selon l'une des revendications précédentes, **caractérisé** **en ce** **que** l'on forme, dans une électronique de surveillance (10), au moins une différence de température entre les valeurs mesurées à l'endroit des au moins deux points de mesure (TF1, TF2 ; TF1', TF2'), le fonctionnement du catalyseur (8) et/ou la commande (2) de la machine à combustion (1) et/ou, le cas échéant, le réglage (6, 7, 2) du catalyseur pouvant être déterminés d'après le signe et/ou la valeur absolue et/ou l'évolution temporelle de la différence de température

7. Procédé selon la revendication 6, **caractérisé** **en ce** **que** la machine à combustion est un moteur à combustion (1), en particulier un moteur à explosion pour véhicule, et comporte une commande de moteur régulée électroniquement, les données produites dans ce moteur, par exemple concernant le nombre de tours du moteur, la charge du moteur, les flux massiques, les conditions environnantes, etc. étant au moins partiellement fonctionnellement combinées, dans l'électroIlique de surveillance (10), à la différence de température, par exemple par l'intermédiaire de plages d'identification, pour permettre un diagnostic précis du fonctionnement du système.

8. Procédé selon la revendication 7, **caractérisé** **en ce** **que** l'on exploite également, dans l'électronique de surveillance (10), les valeurs éventuellement mesurées dans le système d'échappement (5, 9) par une ou plusieurs sondes lambda.

9. Procédé selon l'une des revendications précédentes, **caractérisé** **en ce** **que** l'on recalibre par l'électronique de surveillance les capteurs (TF1, TF2 ; TF1', TF2'; TF) pour des conditions données de fonctionnement, par exemple après un arrêt prolongé de la machine à combustion (1).

10. Dispositif de surveillance du fonctionnement d'un catalyseur (8) pour échappement d'une machine à combustion (1), comprenant:
(a) au moins deux capteurs de température (TF1, TF2 ; TF1', TF2') disposés en au moins deux régions en section transversale du système d'échappement (5, 8, 9) situées l'une après l'autre dans la direction du flux, au moins une partie du volume de catalyseur approprié à la transformation catalytique des matières nocives contenues dans le gaz d'échappement se trouvant entre les deux régions en section transversale, et au moins l'un des capteurs de température (TF; TF1, TF2; TF1', TF2') étant plat ou approximativement linéaire et mesurant intégralement la température sur une partie approximativement représentative du domaine en section transversale où il est placé;
(b) une électronique de surveillance (10), pour exploiter les valeurs des mesures de température ; et
(c) un dispositif afficheur (16), pour afficher le résultat de cette exploitation.

11. Dispositif selon la revendication 10, **caractérisé** **en ce** **que** la machine à combustion (1) comporte une commande électronique (2) et l'électronique de surveillance (10) se trouve reliée à la commande (2) par l'intermédiaire de lignes de données (11), de manière à mettre des données à la disposition de l'électronique de surveillance (10), par exemple concernant le nombre de tours, la charge, les débits massiques, les conditions environnantes, etc.

12. Dispositif selon la revendication 10 ou 11, **caractérisé** **en ce** **qu'**au moins l'un des capteurs de température (TF1, TF2) est intégré dans le catalyseur (8), de préférence au voisinage de sa zone de sortie de flux.

13. Dispositif selon la revendication 12, **caractérisé** **en ce** **qu'**au moins deux des capteurs de température (TF1, TF2) sont intégrés dans le catalyseur (8), de préférence l'un (TF1) au voisinage de sa zone de sortie de flux et l'autre (TF2) au voisinage de sa zone d'entrée de flux.

14. Dispositif selon l'une des revendications 10 à 13, **caractérisé** **en ce** **qu'**au moins l'un des capteurs de température (TF TF1, TF2 ; TF1', TF2') possède une résistance (33, 34) variant en fonction de la température comme organe de mesure.

15. Dispositif selon l'une des revendications 10 à 14, **caractérisé** **en ce** **que** le catalyseur est électriquement réchauffable (17, 18 ; 27, 28) au moins dans des parties de zones, le réchauffage étant régulé de préférence uniformément par l'intermédiaire du dispositif de surveillance (10) avec prise en compte des valeurs de température mesurées.

16. Dispositif selon l'une des revendications 10 à 15, **caractérisé** **en ce** **que** le dispositif de surveillance (10) se trouve reliée à la commande (2) de la machine à combustion (1) par l'intermédiaire de lignes de données (11), de manière à mettre également à la disposition de la commande (2) des données provenant du dispositif de surveillance (10).
